# EUROPÄISCHE PATENTANMELDUNG

(11) **EP 1 269 886 A1**
(43) Veröffentlichungstag der Anmeldung: **02.01.2003**
(21) Anmeldenummer: 02013602.4
(22) Anmeldetag: 19.06.2002
(51) Int. Cl.: A47B 47/00, F16B 7/18

(54) **Anordnung zum Verbinden von insbesondere rohrförmigen Gegenständen**

(30) Priorität: 21.06.2001 DE 20110322 U
(71) Anmelder: Scholz, Horst, 21136 Hamburg (DE)
(72) Erfinder: Scholz, Horst, 21136 Hamburg (DE)
(74) Vertreter: Liebelt, Rolf, Dipl.-Ing.

(57) **Zusammenfassung**

Eine Anordnung zum Verbinden von insbesondere rohrförmigen Gegenständen 23 weist ein Knotenelement 11 mit wenigstens zwei Gewindebohrungen 13 zur Aufnahme des Gewindeabschnittes 14 je einer Verbindungsschraube 15 auf, die an ihrem dem Gewindeabschnitt 14 abgekehrten Ende mit einer wenigstens teilweise umlaufenden Nut 16 versehen ist. Diese Anordnung weist weiter eine Verbindungshülse 18 mit einem als Halterung 24 für den rohrförmigen Gegenstand 23 ausgebildeten Endabschnitt und im anderen Endabschnitt mit einer Bohrung 19 zur Aufnahme der Verbindungsschraube 15 sowie mit wenigstens einer Klemmschraube 21 auf, die in eine sich radial erstreckende Gewindebohrung 20 der Verbindungshülse 18 eindrehbar ist und mit ihrem eingedrehten Ende 22 in die Nut 16 der in die Verbindungshülse 18 eingeführten Verbindungsschraube 15 eingreift.

## Beschreibung

Die Erfindung betrifft eine Anordnung zum Verbinden von insbesondere rohrförmigen Gegenständen. Die Erfindung bezieht sich vorzugsweise auf eine Verbindungsanordnung für rohrförmige Rahmen- und Gerüstelemente von Möbeln, Regalen oder Messebauten. Es wird daher im folgenden überwiegend von Regalmöbeln gesprochen, ohne daß damit eine Einschränkung verbunden sein soll.

Regalmöbel bestehen häufig aus einem Gerüst aus Ständern, Stützen und Streben, zwischen oder an denen Rückwände, Einlegeböden, Seitenwände und eventuell Türen gehalten sind. Das Gerüst wird in der Regel durch Schraubverbindungen zusammengehalten, wozu häufig spezielle Beschläge benötigt werden. Der Vielseitigkeit der Aufbau- und Anbaumöglichkeiten sind hierbei jedoch Grenzen gesetzt.

Der Erfindung liegt die Aufgabe zugrunde, eine Anordnung zum Verbinden von rohrförmigen Gegenständen zu einem Gerüst, insbesondere für Regalmöbel, zu schaffen, das nicht nur einfach zu montieren ist, sondern auch die Erweiterung oder Ergänzung eines bestehenden Gerüstes oder Regalmöbels ohne weiteres ermöglicht.

Diese Aufgabe wird erfindungsgemäß mit einer Anordnung gemäß Patentanspruch 1 gelöst. Mit einer derartigen Anordnung wird erreicht, daß an dem Knotenelement wenigstens zwei als Rohre ausgebildete Gegenstände winklig oder gradlinig zueinander befestigt werden können. Im einzelnen werden dabei zunächst die Verbindungsschrauben in die gewünschten Gewindebohrungen des Knotenelementes eingedreht und anschließend die Verbindungshülsen auf die herausragenden Enden der Verbindungsschrauben gesteckt. Die Klemmschraube wird eingedreht, wodurch sich ein fester Verbund zwischen Knotenelement und Verbindungshülse ergibt. Es ist offensichtlich, daß hiermit ein Gerüst für ein Regalmöbel aufgebaut werden kann.

Zweckmäßigerweise weist das Knotenelement jeweils wenigstens eine Gewindebohrung in den drei Raumrichtungen auf. Damit kann ein beliebiges rechtwinkliges Möbel oder Gerüst aufgebaut werden. Das Knotenelement ist vorzugsweise würfelförmig und vorteilhafterweise an jeder Seite mit einer Gewindebohrung versehen. Damit können an einem Knotenelement bis zu sechs rohrförmige Gegenstände gehalten werden. Ein flexibler Aufbau und auch eine flexible Erweiterung eines stehenden Regalmöbels oder eines Gerüstes oder Rahmens ist somit möglich.

Selbstverständlich kann das Knotenelement auch Flächen umfassen, die beliebige und insbesondere keinen rechten Winkel einschließen. So kann das Knotenelement beispielsweise als Hexaeder, Oktaeder oder als Prismenkörper ausgebildet sein. Damit lassen sich beliebig winklige Gerüste aufbauen.

Bei einer bevorzugten Ausgestaltung der Erfindung verjüngt sich die Klemmschraube an ihrem eingedrehten Ende konisch, so daß beim Eingriff der Klemmschraube in die Nut der Verbindungsschraube die Verbindungshülse in Richtung auf das Knotenelement gezogen wird. Dies kann noch dadurch begünstigt werden, daß sich die Nut in der Verbindungsschraube zur Schraubenachse hin verengt. Damit kann ein besonders guter Halt erzeugt werden. Insbesondere wird ein Lösen der Verbindung durch die Selbsthemmung einer solchen Klemmung vermieden.

Bewährt hat es sich bei einer weiteren Ausführung der Erfindung, die Verbindungsschraube ohne radiales Spiel in der Bohrung der Verbindungshülse zu halten.

Es ist weiter zweckmäßig, die Länge der Klemmschraube so zu bemessen, daß diese in der eingedrehten Lage nicht über die Oberfläche der Verbindungshülse herausragt. Dazu kann die Klemmschraube als Madenschraube ausgebildet sein. Damit wird ein ansprechendes Äußeres der Verbindungsstelle am Gerüst erreicht.

Wie im einzelnen der rohrförmige Gegenstand an der Verbindungshülse gehalten wird, ist grundsätzlich beliebig. So kann die Aufnahme für den Gegenstand als Zapfen ausgebildet sein, auf dem ein Rohr klemmend gehalten ist. Die Aufnahme für den Gegenstand kann auch ein Zapfen mit einer rauhen Oberfläche sein, auf dem ein Rohr mit Reibschluß gehalten ist. Die Verbindungshülse kann weiter über eine Schraubverbindung mit dem Gegenstand verbunden sein. Damit wird ein besonders fester Halt des Gegenstandes an der Verbindungshülse erzielt.

Die Erfindung wird im folgenden an Hand der Zeichnungen näher erläutert. Es zeigen:

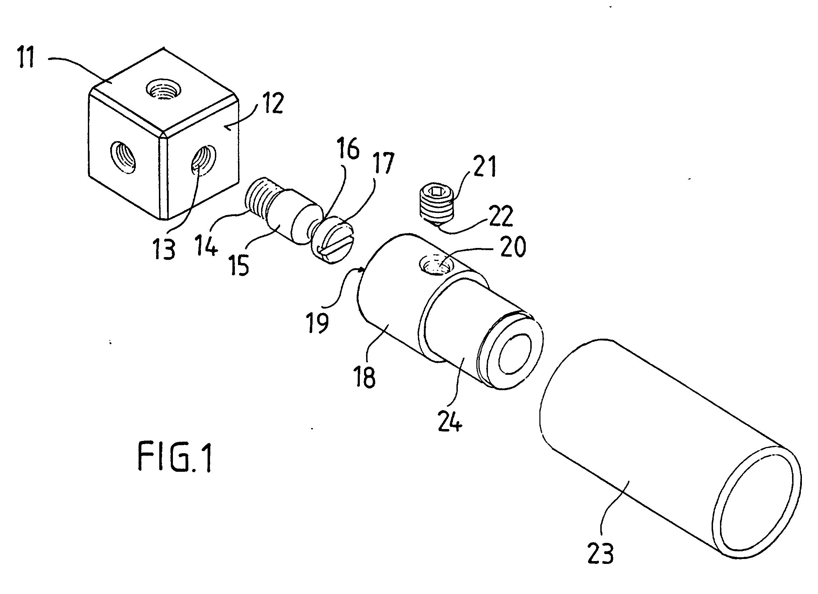

- Fig. 1: eine Verbindungsanordnung in schematischer und auseinandergezogener Darstellung,
- Fig. 2: eine schematische Darstellung der Eckverbindung eines Regalmöbels.

Die in der Zeichnung dargestellte Verbindungsanordnung umfaßt ein würfelförmiges Knotenelement 11, das auf seinen sechs Flachseiten 12 mit jeweils einer Gewindebohrung 13 versehen ist. In die Gewindebohrung 13 ist der Gewindeabschnitt 14 einer Verbindungsschraube 15 einschraubbar, die an ihrem dem Gewindeabschnitt 14 gegenüberliegenden Ende eine umlaufende Nut 16 aufweist, die von einem Schraubenkopf 17 begrenzt wird. An den Schraubenkopf 17 kann ein Werkzeug zum Eindrehen der Verbindungsschraube 15 in die Gewindebohrung 13 angreifen.

Die Maße des Knotenelementes 11 und die Länge des Gewindeabschnittes 14 sind so bemessen, daß in die Gewindebohrungen 13 sämtlicher Flachseiten 12 eine Verbindungsschraube 15 ohne Behinderung durch eine andere Verbindungsschraube 15 vollständig eindrehbar ist. Damit können an einem Knotenelement 11 bis zu sechs Verbindungsschrauben 15 angebracht werden.

In die zentrische Bohrung 19 einer Verbindungshülse 18 sind der aus dem Knotenelement 11 herausragende Abschnitt der Verbindungsschraube 15 sowie der Schraubenkopf 17 im wesentlichen ohne radiales Spiel einführbar. Die Verbindungshülse 18 weist zudem eine radiale Gewindebohrung 20 für eine Klemmschraube 21 auf. Dabei sind die Abmessungen der Verbindungsschraube 15 und der Verbindungshülse 18 derart aufeinander abgestimmt, daß bei in die Verbindungshülse 18 eingesteckter Verbindungsschraube 15 die radiale Gewindebohrung 20 in die Nut 16 der Verbindungsschraube 15 mündet. Durch das Eindrehen der Klemmschraube 21 kommt deren konisches Ende 22 in Eingriff mit der Nut 16, wodurch die Verbindungshülse 18 fest gegen das Knotenelement 11 gezogen wird. Dabei kann sich auch die Nut 16 in Richtung auf die Achse der Verbindungsschraube 15 verjüngen.

Der Abschnitt der Verbindungshülse 18, der dem die Verbindungsschraube 15 aufnehmenden Ende gegenüberliegt, ist mit einer Halterung für ein Rohr 23 versehen. Diese Aufnahme ist als Zapfen 24 ausgebildet, der in die zentrische Bohrung des zumindest endständig hohlen Rohres 23 klemmend oder reibend paßt. Das Rohr 23 kann somit fest an der Verbindungshülse und somit fest an dem Knotenelement 11 gehalten werden. Das Rohr 23 ist vorzugsweise im Querschnitt kreisrund. Es können aber auch andere Querschnitte mit entsprechender Ausbildung des Zapfens 24 montiert werden.

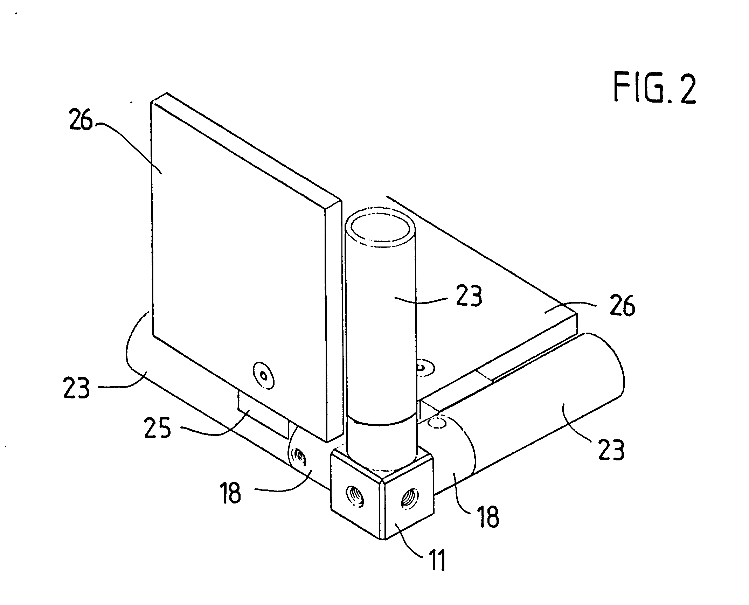

Mit dieser Verbindungsanordnung kann ein beliebiges Regalmöbel aufgebaut werden. In Fig. 2 ist eine Eckverbindung gezeigt, bei welcher drei Rohre 23 an einem Knotenelement 11 über Verbindungsschrauben und -hülsen 18 gehalten sind. Es sind weitere Halteelemente 25 vorgesehen, mit denen Regalböden und -wände 26 an den Rohren 23 gehalten werden.

Die anderen Seiten des Knotenelementes 11 bleiben, wie in der Fig. 2 ersichtlich, frei zugänglich. Weitere Verbindungsschrauben zum Ergänzen eines bereits stehenden Möbels können leicht in die freien Gewindebohrungen des Knotenelementes eingedreht werden.

## Patentansprüche

1. Anordnung zum Verbinden von insbesondere rohrförmigen Gegenständen (23), **gekennzeichnet durch**
a) ein Knotenelement (11) mit wenigstens zwei Gewindebohrungen (13) zur Aufnahme des Gewindeabschnittes (14) je einer Verbindungsschraube (15), die an ihrem dem Gewindeabschnitt (14) abgekehrten Ende eine wenigstens teilweise umlaufende Nut (16) aufweist
und
b) eine Verbindungshülse (18) mit einem als Halterung (24) für den Gegenstand (23) ausgebildeten Endabschnitt und im anderen Endabschnitt mit einer Bohrung (19) zur Aufnahme der Verbindungsschraube (15) sowie mit wenigstens eine Klemmschraube (21), die in eine sich radial erstreckende Gewindebohrung (20) der Verbindungshülse (18) eindrehbar ist und mit ihrem eingedrehten Ende (22) in die Nut (16) der in die Verbindungshülse (18) eingeführten Verbindungsschraube (15) eingreift.

2. Anordnung nach Anspruch 1, **dadurch gekennzeichnet, daß** das Knotenelement (11) jeweils wenigstens eine Gewindebohrung (13) in den drei Raumrichtungen aufweist.

3. Anordnung nach Anspruch 1 oder 2, **dadurch gekennzeichnet, daß** das Knotenelement (11) würfelförmig ist.

4. Anordnung nach einem der Ansprüche 1 oder 2, **dadurch gekennzeichnet, daß** das Knotenelement (11) ein Prismenkörper ist, und daß wenigstens zwei Flachseiten (12) mit Gewindebohrungen (13) keinen rechten Winkel einschließen.

5. Anordnung nach einem der Ansprüche 1 bis 4, **dadurch gekennzeichnet, daß** jede Flachseite (12) des Knotenelementes (11) mit einer Gewindebohrung (13) versehen ist.

6. Anordnung nach einem der Ansprüche 1 bis 5, **dadurch gekennzeichnet, daß** sich die Klemmschraube (21) an ihrem eingedrehten Ende (22) konisch verjüngt, so daß beim Eingriff in die Nut (16) der Verbindungsschraube (15) die Verbindungshülse (18) in Richtung auf das Knotenelement (11) gezogen wird.

7. Anordnung nach einem der Ansprüche 1 bis 6, **dadurch gekennzeichnet, daß** die Nut (16) der Verbindungsschraube (15) sich zur Schraubenmitte hin verengt, so daß beim Eingriff der Klemmschraube (21) in die Nut (16) die Verbindungshülse (18) in Richtung auf das Knotenelement (11) gezogen wird.

8. Anordnung nach einem der Ansprüche 1 bis 7, **dadurch gekennzeichnet, daß** die Verbindungsschraube (15) ohne radiales Spiel in der Bohrung (19) der Verbindungshülse (18) gehalten ist.

9. Anordnung nach einem der Ansprüche 1 bis 8, **dadurch gekennzeichnet, daß** die Länge der Klemmschraube (21) so bemessen ist, daß diese in der eingedrehten Lage nicht aus der Verbindungshülse (18) herausragt.

10. Anordnung nach einem der Ansprüche 1 bis 9, **dadurch gekennzeichnet, daß** die Halterung für den rohrförmigen Gegenstand (23) als Zapfen (24) ausgebildet ist, auf dem der Gegenstand (23) klemmend gehalten ist.

11. Anordnung nach einem der Ansprüche 1 bis 10, **dadurch gekennzeichnet, daß** die Aufnahme für den rohrförigen Gegenstand (23) Zapfen (24) mit einer rauhen Oberfläche ausgebildet ist, auf dem der Gegenstand (23) mit Reibschluß gehalten ist.

12. Anordnung nach einem der Ansprüche 1 bis 11, **dadurch gekennzeichnet, daß** die Verbindungshülse (18) über eine Schraubverbindung mit dem rohrförmigen Gegenstand (23) verbunden ist.
